(19) Europäisches Patentamt
European Patent Office
Office européen des brevets

(11) **EP 2 129 702 B1**

(12) **FASCICULE DE BREVET EUROPEEN**

(45) Date de publication et mention
de la délivrance du brevet:
**07.09.2011 Bulletin 2011/36**

(51) Int Cl.:
***C08G 69/16*** *(2006.01)* ***C08G 69/18*** *(2006.01)*
***C08G 69/28*** *(2006.01)*

(21) Numéro de dépôt: **08718179.8**

(86) Numéro de dépôt international:
**PCT/EP2008/053491**

(22) Date de dépôt: **25.03.2008**

(87) Numéro de publication internationale:
**WO 2008/125429 (23.10.2008 Gazette 2008/43)**

(54) **PROCEDE DE FABRICATION DE POLYAMIDE**

VERFAHREN ZUR HERSTELLUNG VON POLYAMID

PROCESS FOR PRODUCING POLYAMIDE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **27.03.2007 FR 0702199**

(43) Date de publication de la demande:
**09.12.2009 Bulletin 2009/50**

(73) Titulaire: **Rhodia Opérations**
**93306 Aubervilliers (FR)**

(72) Inventeurs:
• **THIERRY, Jean-François**
**F-69340 Francheville (FR)**

• **LOMEL, Sébastien**
**F-38450 Saint Just Chaleyssin (FR)**
• **MOLLET, Vincent**
**F-69390 Vernaison (FR)**
• **HELFT, Matthieu**
**F-69600 Oullins (FR)**
• **FILLON, Cédric**
**F-69004 Lyon (FR)**

(74) Mandataire: **Chatelan, Florence Anne et al**
**Rhodia Services**
**Direction Propriété Industrielle**
**85 rue des Frères Perret**
**69192 Saint-Fons Cedex (FR)**

(56) Documents cités:
**DE-A1- 19 804 023**

EP 2 129 702 B1

**Description**

La présente invention concerne un procédé de fabrication de polyamide. Le polyamide est du type de ceux obtenus par polycondensation à partir de diacides et de diamines et/ou du type de ceux obtenus par polycondensation à partir de lactames et/ou aminoacides. Le procédé est tout à fait adapté à la fabrication de polyhexaméthylène adipamide.

Les polyamides sont des polymères présentant un intérêt industriel et commercial important. Les polyamides thermoplastiques sont obtenus soit par réaction entre deux monomères différents, soit par polycondensation d'un seul monomère. L'invention s'applique d'une part aux polyamides issus de deux monomères différents, dont le polyamide le plus important est le poly(hexaméthylène adipamide). Bien entendu, ces polyamides peuvent être obtenus à partir d'un mélange de diacides et de diamines. Ainsi, dans le cas du poly(hexaméthylène adipamide), les monomères principaux sont l'hexaméthylène diamine et l'acide adipique. Toutefois, ces monomères peuvent comprendre jusqu'à 25 % en mole d'autres monomères diamines ou diacides ou même des monomères aminoacides ou lactames. L'invention s'applique d'autre part aux polyamides issus d'un seul monomère, dont le polyamide le plus important est le polycaprolactame. Bien entendu, ces polyamides peuvent être obtenus à partir d'un mélange de lactames et/ou aminoacides. Ainsi, dans le cas du polycaprolactame, le monomère principal est le caprolactame. Toutefois, ces monomères peuvent comprendre jusqu'à 25 % en mole d'autres monomères aminoacides ou lactames ou même des monomères diamines ou diacides.

La classe de polyamides issue de deux monomères différents est généralement fabriquée en utilisant comme matière première, un sel obtenu par mélange en quantité stoechiométrique en général dans un solvant comme l'eau d'un diacide avec une diamine.

Ainsi, dans la fabrication du poly(hexaméthylène adipamide), l'acide adipique est mélangé avec de l'hexaméthylène diamine généralement dans de l'eau pour obtenir de l'adipate d'hexaméthylène diammonium plus connu sous le nom de sel Nylon ou "Sel N".

La solution de sel N est éventuellement concentrée par évaporation partielle ou totale de l'eau.

La classe de polyamides issue d'un seul monomère est généralement fabriquée en utilisant comme matière première, un lactame et/ou un aminoacide, et une faible quantité d'eau ; la proportion en poids de l'eau est généralement comprise entre 1 et 15%.

Le polyamide est obtenu par chauffage à température et pression élevées d'une solution aqueuse des monomères (par exemple une solution de sel Nylon telle que décrite ci-dessus), ou d'un liquide comprenant les monomères, pour évaporer l'eau tout en évitant toute formation de phase solide afin d'éviter une prise en masse.

On connaît plusieurs procédés utilisant différents types de dispositifs pour la fabrication de polyamides.

On connaît des procédés au cours desquels la polycondensation est effectuée en phase fondue comprenant la solution de sel N ou le liquide comprenant les monomères, le flux réactionnel s'écoulant à faible vitesse dans la partie inférieure d'un réacteur d'axe horizontal. La partie supérieure du réacteur comprend de la vapeur d'eau, évaporée à partir de la solution initiale ou produite par la réaction de polycondensation. Le flux réactionnel fondu est en présence d'une phase gazeuse qui présente sensiblement la même pression dans tout le réacteur. La vapeur d'eau est en partie évacuée, de manière à contrôler la pression. La réaction de polycondensation est ainsi effectuée à une pression d'environ 0,5-2,5 MPa à une température d'environ 215-300°C. Le flux réactionnel subit ensuite une détente non adiabatique jusqu'à pression atmosphérique par passage dans un flasheur, c'est-à-dire un dispositif tubulaire chauffé présentant une surface d'échange suffisante pour éviter la cristallisation du produit. Au cours de cette opération de l'eau résiduelle contenue dans le flux de matière est vaporisée. La vapeur et le flux liquide sont ensuite séparés dans un séparateur gaz-liquide. La polycondensation est poursuivie en phase fondue à pression atmosphérique ou réduite de manière à atteindre le degré d'avancement souhaité.

On connaît d'autres procédés, au cours desquels la polycondensation est effectuée en phase fondue en réacteur tubulaire, présentant un rapport longueur/diamètre important. Le flux réactionnel s'écoule à grande vitesse, occupant toute la section du réacteur. Le régime hydrodynamique de ce réacteur est tel que la vapeur d'eau issue de la réaction est mêlée au flux de matière par exemple sous forme de bulles. La vitesse, la composition, la pression et la température de la phase gazeuse de vapeur d'eau varie le long du réacteur. La surface d'échange entre milieu réactionnel et fluide caloporteur est importante, ce qui favorise les transferts de chaleur. Les temps de séjour sont généralement plus courts que dans les procédés décrits précédemment.

Les réacteurs tubulaires sont généralement des serpentins compris dans une enceinte comprenant un fluide caloporteur ou compris dans une double enveloppe de circulation de fluide caloporteur. De telles installations présentent l'avantage d'être très compactes.

Des procédés de fabrication de polyamide en réacteur tubulaire sont décrits dans les documents FR 1505307, FR 1352650, FR 1520190. Dans les procédés décrits, on injecte un flux d'une solution de sel N à une pression de l'ordre de 1 à 5 MPa dans un serpentin dont le diamètre augmente progressivement.

Le flux de matière fondu, subit une polycondensation, libérant de la vapeur d'eau. Il subit le long du réacteur une détente progressive, par perte de charge.

Le polyamide sort du serpentin à pression atmosphérique, avec un degré d'avancement de polymérisation important, et donc une viscosité fondue importante et suffisante pour assurer sa montée en masse dans une étape ultime de finition. Ces procédés présentent l'avantage de mettre en oeuvre des installations très compactes et de conduite très aisée.

Ils présentent toutefois des inconvénients. A l'extrémité du serpentin, la vitesse d'écoulement du polyamide fondu est faible et celle de la vapeur d'eau est forte. Le régime d'écoulement peut être annulaire, avec un flux de vapeur très rapide au centre et un flux lent de polyamide fondu très visqueux à la périphérie. Par accumulation au cours du temps, il se forme des dépôts solides de polyamide dégradé sur les parois. Ces dépôts sont susceptibles de se détacher inopinément, altérant ainsi la qualité finale du polyamide Ils modifient de plus les écoulements et donc la marche du procédé. Ils rendent nécessaire un nettoyage fréquent des installations et donc un arrêt de la production et un démontage induisant des coûts de maintenance importants. De plus, ces procédés sont peu flexibles. En effet leur marche (pression, température, avancement) est directement liée à la géométrie des installations. Une modification des débits en fonction des besoins de production modifie les régimes d'écoulement et d'échange de chaleur. En particulier, pour une géométrie donnée, lorsque le débit diminue, le régime d'écoulement a tendance à favoriser les dépôts.

Le document DE 198 04 023 A1 décrit un procédé de fabrication en continu de polyamides à partir d'aminonitriles, au cours duquel le temps de séjour dans l'étape de séparation phase gazeuse - phase liquide est compris préférentiellement entre 10 minutes et 5 heures.

La présente invention propose un procédé continu de fabrication de polyamide, en particulier en réacteur tubulaire, amélioré. Il met en oeuvre une installation compacte. Il est flexible et facile à conduire.

A cet effet, l'invention propose un procédé de fabrication en continu d'un polyamide comprenant au moins les étapes suivantes :

- Etape 1: Polycondensation dans un réacteur d'un flux de liquide comprenant les monomères, à une pression P1 supérieure à la pression atmosphérique, le flux de matière en sortie du réacteur étant constitué d'une phase vapeur comprenant au moins de la vapeur d'eau et d'une phase liquide comprenant au moins le produit de polycondensation

- Etape 2: Alimentation du flux de matière dans une enceinte, évacuation au niveau de l'enceinte d'au moins une partie de la phase vapeur et récupération d'au moins la phase liquide comprenant au moins le produit de polycondensation, la pression P2 dans l'enceinte étant régulée à une valeur de consigne telle qu'elle soit supérieure à la pression atmosphérique et que le temps de séjour de la phase liquide dans l'enceinte soit inférieur à 5 minutes, de préférence inférieur à 1 minute

- Etape 3: Détente d'au moins la phase liquide comprenant au moins le flux de produit de polycondensation, récupérée lors de l'étape 2.

Le procédé de fabrication selon l'invention est un procédé de fabrication de polyamides du type de ceux obtenus à partir d'acides dicarboxyliques et de diamines et/ou du type de ceux obtenus par polycondensation à partir de lactames et/ou aminoacides.

Les monomères lactames ou aminoacides peuvent par exemple être choisis parmi le caprolactame, l'acide 6-aminohexanoïque ; l'acide 5-aminopentanoïque, l'acide 7-aminoheptanoïque, l'acide aminoundécanoïque, le dodécanolactame. Le lactame préféré est le caprolactame.

Les monomères acides dicarboxyliques peuvent par exemple être choisis parmi l'acide glutarique, l'acide adipique, l'acide subérique, l'acide sébacique, l'acide dodécanedioïque ; l'acide 1,2-ou 1,3-cyclohexane dicarboxylique ; l'acide 1,2-ou 1,3-phénylène diacétique ; l'acide 1,2-ou 1,3-cyclohexane diacétique ; l'acide isophthalique ; l'acide téréphthalique ; l'acide 4,4'-benzophénone dicarboxylique ; l'acide 2,5-naphthalène dicarboxylique; et l'acide p-t-butyl isophthalique. L'acide dicarboxylique préféré est l'acide adipique.

Les monomères diamines peuvent par exemple être choisis parmi l'hexaméthylène diamine ; la butane diamine ; la 2-méthyl pentaméthylène diamine ; la 2-méthyl hexaméthylène diamine ; la 3-méthyl hexa-méthylène diamine ; la 2,5-diméthyl hexaméthylène diamine ; la 2,2-diméthylpentaméthylène diamine ; la nonane diamine ; la 5-méthylnonane diamine ; la dodécaméthylène diamine ; la 2,2,4-et 2,4,4-trimethyl hexaméthylène diamine ; la 2,2,7,7-tétraméthyl octaméthylène diamine ; la méta-xylylène diamine ; la paraxylylène diamine ; l'isophorone diamine ; le diaminodicyclohexyl méthane et les diamines aliphatiques en C2 -C16 qui peuvent être substituées par un ou plusieurs groupements alkyles. La diamine préférée est l'hexaméthylène diamine.

Il s'agit d'un procédé de fabrication continu, les transformations s'effectuant sur des flux de matière. Les flux de matière subissent des transformations au cours des différentes étapes, effectuées dans une ou plusieurs installations. Le procédé comprend au moins les trois étapes successives décrites ci-dessus. Il peut évidemment en comporter d'autres en amont ou en aval, ou même entre celles-ci.

La principale transformation opérée lors de la mise en oeuvre du procédé est généralement la polycondensation d'un acide dicarboxylique sur une diamine ou d'un lactame et/ou aminoacide. Cette transformation est bien connue de l'homme du métier, par exemple pour la fabrication de polyamide 66 à partir d'acide adipique et d'hexaméthylène diamine, ou pour la fabrication de polyamide 6 à partir de caprolactame. Cette polycondensation libère généralement de l'eau, sous forme de vapeur.

On définit le degré d'avancement de la polycondensation comme suit :

$$\text{Degré d'avancement (\%)} = [(\text{nombre de moles de motifs amide formés})/(\text{nombre de moles de fonctions réactives initiales en défaut})]*100$$

Le nombre de moles de fonctions réactives initiales en défaut est :

- soit le nombre de moles de fonctions acides carboxyliques issues des monomères présentes initialement dans le milieu réactionnel, si les fonctions réactives en défaut initialement dans ce milieu sont les fonctions acides carboxyliques (par rapport aux fonctions amines),
- soit le nombre de moles de fonctions amines issues des monomères présentes initialement dans le milieu réactionnel, si les fonctions réactives en défaut initialement dans ce milieu sont les fonctions amines (par rapport aux fonctions acides carboxyliques).

Selon le degré d'avancement de la polycondensation, le produit obtenu peut être qualifié d'amidifiat, d'oligomère de polyamide, de prépolymère de polyamide ou de polyamide.

La polycondensation est de préférence principalement effectuée au cours de l'étape 1. C'est au cours de cette étape que le degré d'avancement augmente le plus. La polycondensation peut toutefois continuer lors des étapes 2 ou 3, ou lors d'étapes ultérieures.

Le degré d'avancement de la polycondensation à l'issue de l'étape 3 est avantageusement supérieur à 60%, de préférence supérieur à 90 %.

La température lors de l'étape 1 est telle qu'il n'y ait pas de solidification du flux de matière.

La polycondensation nécessite un apport de chaleur, la température d'alimentation étant généralement très inférieure à la température de fusion du polymère final. Les installations utilisées pour la mise en oeuvre du procédé comprennent donc des moyens d'apport de chaleur, dans le but de maintenir le milieu réactionnel à une température suffisante pour éviter l'apparition d'une phase solide. Elles comprennent de même tous les moyens qui peuvent être nécessaires à sa mise en oeuvre, comme des pompes, des moyens d'analyse, de contrôle, des vannes, des moyens d'introduction de stockage de flux de matière, des mélangeurs statiques.

Pour la mise en oeuvre de l'étape 1 de polycondensation on introduit dans le réacteur un flux liquide comprenant les monomères du polyamide à préparer. Pour préparer un polyamide de type PA66, les monomères sont des acides dicarboxyliques et des diamines. Pour préparer un polyamide de type PA6, les monomères sont des lactames et/ou aminoacides. Ces composés constituent les monomères principaux. Il peut s'agir d'une solution aqueuse. L'acide et la diamine sont avantageusement en proportions sensiblement stoechiométriques, dans le cas de la préparation de polyamide de type PA66.

L'acide dicarboxylique est de préférence l'acide adipique et la diamine est de préférence l'hexaméthylène diamine. Le flux peut comprendre d'autres monomères, tels que d'autres acides dicarboxyliques ou d'autres diamines, ou des aminoacides ou lactames, tel que le caprolactame.

Le lactame est de préférence le caprolactame. Le flux peut comprendre d'autres monomères, tels que d'autres lactames et/ou aminoacides, ou des acides dicarboxyliques ou des diamines, tels que l'hexaméthylène diamine ou l'acide adipique.

Pour la préparation de polyamide de type PA66, le flux alimenté est de préférence un flux d'une solution aqueuse de sel N, comprenant de l'acide adipique ou une de ses formes ioniques et de l'hexaméthylène diamine ou une de ses formes ioniques, en proportions sensiblement stoechiométriques. Pour la préparation de polyamide de type PA6, le flux alimenté est de préférence constitué d'un mélange de caprolactame et d'eau. Le flux alimenté comprend avantageusement 50 à 100% en poids de monomères, par exemple il comprend de préférence 50 à 80% de sel N dans le cas de la production de PA66.

Une telle solution peut par exemple être obtenue par dissolution d'un sel solide ou par dissolution de l'acide et de la diamine avec un contrôle de la stoechiométrie à l'aide d'un moyen approprié, par exemple une analyse pH-métrique ou proche infra-rouge. La solution peut avoir subi une opération de préchauffage avant introduction dans le réacteur. La solution peut avoir subi une opération de concentration, par évaporation d'eau, et/ou de préchauffage avant introduction dans le réacteur.

Le flux comprenant l'acide dicarboxylique et la diamine peut également être obtenu par chauffage du sel solide ou de l'acide et de la diamine.

Le flux comprenant les monomères est alimenté dans le réacteur à une pression supérieure à la pression atmosphérique, et à une température telle que le flux soit liquide.

Le flux comprenant les monomères est alimenté dans le réacteur. Le flux de matière s'écoule dans le réacteur. Au cours de l'avancement du flux dans le réacteur, notamment dans le réacteur tubulaire, il intervient une polycondensation entre la diamine et le diacide pour former des chaînes de polyamide, avec formation d'eau dont une partie peut se vaporiser.

Le flux de matière, avant la sortie du réacteur peut être constitué uniquement d'une phase liquide comprenant le produit de polycondensation et de l'eau dissoute. Dans ce cas, une phase vapeur est produite, comprenant de l'eau qui s'est vaporisée à partir de la phase liquide, par exemple en mettant en oeuvre une vanne juste avant la sortie du réacteur.

Le flux de matière en sortie du réacteur contient une phase liquide comprenant au moins le produit de polycondensation sous forme fondue et éventuellement de l'eau dissoute, et une phase vapeur comprenant au moins de la vapeur d'eau. Le régime hydrodynamique dans le réacteur dépendra de l'agencement choisi et des conditions opératoires, la phase gazeuse comprenant de la vapeur d'eau et la phase liquide pouvant ou non être mélangées. Il s'agit alors d'un écoulement gaz-liquide. Les deux phases s'écoulent à co-courant dans le réacteur.

Le réacteur est maintenu à une température suffisante pour que la polycondensation ait lieu. On peut avantageusement alimenter le réacteur avec un flux préchauffé, dont la température est proche de la température de début de polycondensation.

La pression P1 dans le réacteur est généralement comprise entre 0,5 et 3,5 MPa, et la température entre 180 et 320°C.

Selon un mode de réalisation particulier du procédé de l'invention, dans l'étape 1 on alimente le flux de liquide à une pression P'1 supérieure à la pression atmosphérique, le flux de matière en sortie du réacteur étant à une pression P"1 inférieure à la pression d'alimentation P'1 et supérieure à la pression atmosphérique.

La pression d'alimentation P'1 du flux dans le réacteur est avantageusement supérieure à 1 MPa, de préférence supérieure à 1,5 MPa, encore plus préférentiellement supérieure à 1,8 MPa ou même 3,0 MPa, par exemple si le débit de production est important.

Le réacteur est de préférence un réacteur tubulaire. Il présente avantageusement un rapport longueur sur diamètre supérieur à 100. Il est de préférence supérieur à 500. Dans le réacteur, la vitesse superficielle de la phase liquide est de préférence supérieure à 0,1 m/seconde. La vitesse est définie par le rapport entre le débit volumique de la phase liquide et la section de l'écoulement du flux de matière. Le temps de séjour de la phase liquide dans le réacteur est avantageusement supérieur à 1 minute, de préférence supérieur à 5 min. Il n'excède de préférence pas 60 minutes.

Le degré d'avancement de la polycondensation en sortie du réacteur est avantageusement supérieur à 60%, de préférence supérieur à 90%. La longueur, le diamètre du réacteur tubulaire et la vitesse du flux peuvent être adaptés et contrôlés pour obtenir le degré d'avancement désiré.

La pression dans le réacteur de polycondensation diminue généralement par perte de charge de l'entrée vers la sortie du réacteur. La pression de sortie P"1 est toutefois supérieure à la pression atmosphérique. Elle est avantageusement supérieure à 0,5 MPa, de préférence supérieure à 1,0 MPa.

Selon un mode de réalisation préféré de l'invention, le réacteur tubulaire est un serpentin de rapport longueur sur diamètre supérieur à 500. La longueur du serpentin est de préférence supérieure à 200 m. Le diamètre interne est de préférence inférieur à 200 mm.

Le serpentin peut comprendre plusieurs parties de diamètres différents, le diamètre augmentant progressivement ou de manière séquencée de l'entrée vers la sortie du réacteur. Un tel dispositif permet de diminuer la pression de manière contrôlée et progressive et aussi de diminuer globalement la différence de pression entre la pression d'entrée et la pression de sortie du réacteur. Le rapport longueur/diamètre du réacteur lorsqu'il comprend plusieurs parties de diamètre différent est avantageusement supérieur à 10, de préférence supérieur à 500.

Le réacteur tubulaire est généralement placé dans une enceinte ou une double-enveloppe comprenant un fluide caloporteur. Le fluide caloporteur est par exemple le Therminol VP-1 ®. Lorsque le fluide caloporteur est sous forme de vapeur, il est maintenu sous cette forme à l'aide d'un rebouilleur. Le réacteur est par exemple un serpentin hélicoïdal placé dans une enceinte ainsi chauffée.

Selon l'invention, la phase liquide comprenant le produit de polycondensation et la phase vapeur comprenant de la vapeur d'eau en sortie du réacteur sont alimentés dans un dispositif destiné à évacuer au moins une partie de la vapeur d'eau..

La phase liquide comprenant le produit de polycondensation se dirigera au fond de l'enceinte et la phase vapeur occupera la partie supérieure. La pression P2 dans l'enceinte est supérieure à la pression atmosphérique. Elle est de préférence comprise entre 0,5 et 2,5 MPa. La pression P2 est inférieure ou égale à la pression P"1.

Le dispositif d'évacuation comprend un moyen pour évacuer la phase vapeur et un moyen de récupération de la phase liquide comprenant le produit de polycondensation, sous forme fondue.

La pression P2 dans l'enceinte peut être régulée par le débit d'évacuation de la phase vapeur. Pour augmenter la pression on peut par exemple diminuer le degré d'ouverture de la vanne d'évacuation de la phase vapeur.

La pression P2 dans l'enceinte est avantageusement régulée de manière à ce qu'il n'y ait pas de rétention de la phase liquide dans l'enceinte. Il est préférable que le temps de séjour de la phase liquide dans l'enceinte d'évacuation soit réduit au minimum, voire qu'il soit quasi nul (c'est-à-dire inférieur à quelques secondes voire quelques dixièmes de secondes, ou de l'ordre de quelques secondes voire quelques dixièmes de secondes). Le temps de séjour de la phase liquide dans l'enceinte est assimilé à un temps de passage de cette phase liquide dans l'enceinte.

Selon un mode de réalisation préférentiel, le flux de vapeur évacué, et donc aussi la pression dans l'enceinte sont asservis à une détection de niveau de liquide dans l'enceinte où est effectuée l'évacuation, plus particulièrement dans la partie de l'enceinte destinée à la récupération de la phase liquide. Un niveau de consigne de la phase liquide dans la partie de l'enceinte destinée à la récupération de la phase liquide, par exemple une hauteur de liquide dans cette partie d'enceinte, est choisi. Lorsque le niveau de liquide dépasse le niveau de consigne, on agit sur une vanne d'évacuation de la phase vapeur afin de limiter le flux de phase vapeur évacué et d'augmenter ainsi la pression dans l'enceinte. L'augmentation de la pression favorise l'écoulement de la phase liquide comprenant le produit de polycondensation dans le dispositif de détente de l'étape 3, ce qui a pour effet de réduire **le** niveau de liquide dans l'enceinte. Le niveau de consigne est avantageusement choisi de telle sorte que la quantité de phase liquide dans l'enceinte d'évacuation soit minimum. Par exemple, si le niveau de consigne est une hauteur de liquide donnée dans la partie de l'enceinte destinée à la récupération de la phase liquide, cette hauteur de consigne sera de préférence choisie la plus faible possible. Il est possible, si ce niveau est ajusté à une valeur suffisamment faible, qu'une partie de la phase vapeur provenant de l'enceinte accompagne la phase liquide dans le dispositif de l'étape 3.

Une méthode pouvant être utilisée pour déterminer le temps de séjour de la phase liquide dans l'enceinte consiste à injecter un traceur en amont de l'enceinte, à le récupérer en aval de l'enceinte, et à mesurer la durée entre l'injection et la récupération du traceur. Le traceur est une substance inerte n'ayant pas d'interaction chimique ou physique avec le milieu réactionnel. Cette méthode est connue de l'homme du métier et notamment décrite dans l'ouvrage « Génie de la réaction chimique » , Daniel Schweich, Ed.Technique et Documentation, 2001, p.137-141. Le temps de séjour de la phase liquide dans l'enceinte peut également être déterminé, dans le cas où il existe un contrôle du niveau de liquide dans la partie de l'enceinte destinée à la récupération de la phase liquide, par le rapport entre le volume de cette partie de l'enceinte et le débit volumique de liquide.

Le dispositif d'évacuation est de préférence un dispositif de type cyclone. Un tel dispositif est connu de l'homme du métier. Il comprend une partie cylindrique dans laquelle est alimenté tangentiellement le flux de matière issu de l'étape 1, une partie conique destinée à la récupération de la phase liquide comprenant le produit de polycondensation, et un dispositif d'évacuation de la phase vapeur. Dans la partie conique le flux de matière forme un film sur les parois du cyclone. Selon un mode pratique le cyclone est muni de moyens de mesure du niveau du produit liquide de polycondensation récupéré, mesure à laquelle est asservie la pression de fonctionnement du cyclone. Lorsqu'un niveau de consigne est dépassé, on augmente alors la pression dans le cyclone en réduisant le débit d'évacuation de la phase vapeur. Le cyclone peut être chauffé par un fluide caloporteur.

Au cours de l'étape 3, le flux de produit de polycondensation issu de l'étape 2 subit une détente non adiabatique, pour atteindre une pression généralement voisine de la pression atmosphérique. Cette détente est de préférence effectuée par perte de charge dans un dispositif tubulaire chauffé et dimensionné de manière à ce que l'écoulement génère une perte de charge sensiblement égale à la différence entre la pression de fonctionnement souhaitée pour l'enceinte de l'étape 2 et la pression atmosphérique. Ce dispositif tubulaire est avantageusement placé dans une enceinte comprenant un fluide caloporteur. Le dispositif de détente peut être un serpentin hélicoïdal constitué le cas échéant de plusieurs sections. Il peut s'agir de la même enceinte que celle comprenant le réacteur tubulaire. Cette disposition présente l'avantage d'être très compacte.

Il est possible que le degré d'avancement de la polycondensation augmente au cours de cette étape.

Le flux à l'issue de l'étape 3 présente avantageusement un degré d'avancement de la polycondensation supérieur à 90 %.

Le produit de polycondensation issu de l'étape 3 est un polymère ou prépolymère fondu. Il peut comprendre une phase vapeur essentiellement constituée de vapeur d'eau, susceptible d'avoir été formée et/ou vaporisée au cours de la phase de détente.

Ce produit peut être soumis à des étapes de séparation de phase vapeur et de finition afin d'atteindre le degré de polycondensation désiré. La séparation de la phase vapeur peut par exemple être réalisée dans un dispositif de type cyclone. De tels dispositifs sont connus.

La finition consiste à maintenir le produit de polycondensation à l'état fondu, sous une pression voisine de la pression atmosphérique ou sous pression réduite, pendant un temps suffisant pour atteindre le degré d'avancement désiré. Une telle opération est connue de l'homme du métier. La température de l'étape de finition est avantageusement supérieure ou égale à 200°C et dans tous les cas supérieure à la température de solidification du polymère. Le temps de séjour dans le dispositif de finition est de préférence supérieur ou égal à 5 minutes.

Le flux de liquide issu de l'étape 3 ou de l'étape de finition peut également subir une étape de post-condensation en phase solide. Cette étape est connue de l'homme du métier et permet d'augmenter le degré de polycondensation à une valeur souhaitée.

Le polyamide obtenu à la fin de l'étape de finition peut être refroidi et mis sous forme de granulés. Il présente de préférence après l'étape de finition ou de post-condensation en phase solide un degré d'avancement de polycondensation supérieur à 99%.

Selon une variante particulière de l'invention, le procédé comporte plusieurs étapes successives de polycondensation / évacuation de la phase liquide et de la phase vapeur, qui précèdent l'étape de détente à la pression voisine de la pression atmosphérique. Selon un mode de réalisation particulier de l'invention, le procédé comprend, entre les étapes 2 et 3, au moins une série d'étapes successives de polycondensation i et d'évacuation j analogues respectivement aux étapes 1 et 2 à partir de la phase liquide issue de l'étape 2, les pressions dans le réacteur tubulaire de polycondensation de l'étape i et dans l'enceinte d'évacuation de l'étape j étant supérieures à la pression atmosphérique, et la pression P'i d'entrée dans le réacteur tubulaire de polycondensation de l'étape i étant supérieure à la pression P''i de sortie de celui-ci. Les étapes i et j peuvent être répétées au moins deux fois, le flux d'alimentation de l'étape de polycondensation i+1 étant issu de l'étape d'évacuation j. La pression Pj est inférieure ou égale à la pression P''i. Dans la pratique, plusieurs réacteurs tubulaires de polycondensation et plusieurs dispositifs d'évacuation tels que des cyclones décrits ci-dessus sont montés en série. De préférence ils sont placés dans une même enceinte comprenant un fluide caloporteur. Les paramètres notamment de pression, température, temps de séjour, géométrie dans les différents réacteurs de polycondensation sont choisis en fonction du degré de polycondensation souhaité à l'issue de chaque étape de polycondensation et du degré de polycondensation final souhaité. Chaque dispositif d'évacuation tel qu'un cyclone est mis en oeuvre à une pression supérieure à la pression atmosphérique, et la pression au sein de chaque cyclone est régulée de manière à ce qu'il n'y ait pas ou peu de rétention de la phase liquide dans l'enceinte d'évacuation, par exemple à l'aide d'un asservissement du débit de phase vapeur évacuée à un niveau de consigne de liquide présent dans l'enceinte d'évacuation.

Le polyamide obtenu par le procédé de l'invention sous forme fondue peut être directement mis en forme ou être extrudé et granulé, pour une mise en forme ultérieure après fusion.

Le polyamide peut être utilisé pour un grand nombre d'applications, notamment pour la fabrication de fils, fibres ou filaments, ou pour des mises en forme d'articles par moulage injection, extrusion. Il peut notamment être utilisé dans des compositions de plastiques techniques.

Le procédé de l'invention présente de nombreux avantages. Il s'agit d'un procédé continu qui permet l'obtention d'un produit uniforme d'une part, et une grande flexibilité du débit de fonctionnement -par réglage du débit d'évacuation de la phase vapeur au niveau du dispositif d'évacuation- tout en limitant l'encrassement de l'installation par des résidus solides de polymère dégradé. Ce procédé minimise le nombre de machines tournantes à mettre en oeuvre (par exemple le nombre de pompes) ainsi que la pollution par les composés organiques contenus dans les effluents (par exemple l'hexaméthylène diamine présente dans la phase vapeur). En outre la phase gazeuse sous pression évacuée au niveau du dispositif d'évacuation, essentiellement constituée de vapeur d'eau, peut être facilement récupérée et réutilisée comme source d'énergie, par exemple pour le chauffage du flux d'alimentation en monomères.

D'autres détails ou avantages de l'invention apparaîtront plus clairement à la vue des exemples donnés ci-dessous.

<u>Indice de viscosité :</u> mesuré dans l'acide formique 90% selon la norme ISO 307 :2003.

**EXEMPLE**

On alimente 1157 kg/h d'une solution aqueuse contenant 70% en poids d'adipate d'hexaméthylène diammonium à 150°C, dans un tube en acier inoxydable enroulé en spirales situé dans une enceinte cylindrique de 1 m de diamètre et 4 m de hauteur, chauffée par un fluide thermique à 280°C. Ce tube de 40,9 mm de diamètre interne et 440 mètres de long conduit le flux réactionnel à un séparateur de type cyclone également chauffé par un fluide thermique à 280°C. Le flux sortant du tube et entrant dans le séparateur est constitué d'une solution aqueuse de prépolymère d'indice de viscosité environ égal à 30 mUg et d'une phase vapeur composée majoritairement d'eau.

La durée de la réaction dans le tube est d'environ 15 minutes et la pression à l'entrée du tube est égale à 2,6 MPa. La pression dans le séparateur est régulée à 1,9 MPa à l'aide d'une vanne de détente permettant d'éliminer une partie de la phase vapeur à hauteur de 346 kg/h. Le flux restant constitué de la phase liquide et du reliquat de phase vapeur est évacué dans un dispositif de détente constitué d'une série de tubes enroulés en spirales, également intégrée dans l'enceinte chauffée et permettant de détendre le milieu jusqu'à une pression voisine de la pression atmosphérique. Cette série de tubes consiste en un premier enroulement de 163 mètres de long et de 32,5 mm de diamètre interne suivi d'un second enroulement de 27 mètres de long et de 36,6 mm de diamètre interne. La durée de l'étape de détente est d'environ 4 minutes. On obtient une phase vapeur et un prépolymère liquide d'indice de viscosité de 47 mL/g.

Ce mélange réactionnel est introduit à une température voisine de 280°C dans un finisseur vertical fonctionnant à une pression voisine de la pression atmosphérique et équipé d'une sortie pour la phase vapeur. On soutire de ce finisseur un polymère d'indice de viscosité égal à 131 mUg à un débit de 698 kg/h.

**EP 2 129 702 B1**

**Revendications**

1. Procédé de fabrication en continu d'un polyamide comprenant au moins les étapes suivantes :

   - Etape 1: Polycondensation dans un réacteur d'un flux de liquide comprenant les monomères, à une pression P1 supérieure à la pression atmosphérique, le flux de matière en sortie du réacteur étant constitué d'une phase vapeur comprenant au moins de la vapeur d'eau et d'une phase liquide comprenant au moins le produit de polycondensation
   - Etape 2: Alimentation du flux de matière dans une enceinte, évacuation au niveau de l'enceinte d'au moins une partie de la phase vapeur et récupération d'au moins la phase liquide comprenant au moins le produit de polycondensation, la pression P2 dans l'enceinte étant régulée à une valeur de consigne telle qu'elle soit supérieure à la pression atmosphérique et que le temps de séjour de la phase liquide dans l'enceinte soit inférieur à 5 minutes, de préférence inférieur à 1 minute
   - Etape 3: Détente d'au moins la phase liquide comprenant au moins le flux de produit de polycondensation, récupérée lors de l'étape 2.

2. Procédé selon la revendication 1, **caractérisé en ce que** dans l'étape 1 on alimente le flux de liquide à une pression P'1 supérieure à la pression atmosphérique, le flux de matière en sortie du réacteur étant à une pression P"1 inférieure à la pression d'alimentation P'1 et supérieure à la pression atmosphérique

3. Procédé selon la revendication 1 ou 2, **caractérisé en ce que** dans l'étape 2 la pression P2 dans l'enceinte est régulée à une valeur de consigne telle qu'il n'y a pas de rétention de la phase liquide dans l'enceinte

4. Procédé selon l'une des revendications précédentes, **caractérisé en ce que** le réacteur est un réacteur tubulaire

5. Procédé selon l'une des revendications précédentes **caractérisé en ce que** les monomères sont un acide dicarboxylique et une diamine

6. Procédé selon la revendication 5, **caractérisé en ce que** le polyamide est un polyamide 66 ou un copolyamide dont la majorité des motifs de répétition sont des motifs polyamide 66, l'acide dicarboxylique étant l'acide adipique et la diamine étant l'hexaméthylène diamine.

7. Procédé selon l'une des revendications 1 à 4, **caractérisé en ce que** les monomères sont un lactame et/ou un aminoacide

8. Procédé selon la revendication 7, **caractérisé en ce que** le polyamide est un polyamide 6 ou un copolyamide dont la majorité des motifs de répétition sont des motifs polyamide 6, le lactame étant le caprolactame et/ou l'aminoacide étant l'acide aminohexanoïque.

9. Procédé selon l'une des revendications précédentes, **caractérisé en ce que** le flux de liquide comprenant les monomères est une solution aqueuse

10. Procédé selon l'une des revendications précédentes, **caractérisé en ce que** le flux de liquide comprend entre 50% et 100 % en poids de monomères.

11. Procédé selon l'une des revendications précédentes **caractérisé en ce que** le flux alimenté dans le réacteur tubulaire est à une pression P'1 supérieure à 1 MPa de préférence supérieure ou égale à 1,5 MPa.

12. Procédé selon l'une des revendications précédentes **caractérisé en ce que** le flux de matière en sortie du réacteur tubulaire est à une pression P"1 supérieure à 0,5 MPa de préférence supérieure ou égale à 1 MPa et à une température supérieure à 200°C

13. Procédé selon l'une des revendications précédentes, **caractérisé en ce que** le degré d'avancement de la polycondensation en sortie du réacteur est supérieur à 90% pour un polyamide 66

14. Procédé selon l'une des revendications précédentes, **caractérisé en ce que** le temps de séjour de la phase liquide dans le réacteur est supérieur à 5 minutes.

**15.** Procédé selon l'une des revendications précédentes, **caractérisé en ce que** le réacteur tubulaire comprend un ou plusieurs segments de diamètres différents dont le rapport longueur/diamètre est supérieur à 100, de préférence supérieur à 500.

**16.** Procédé selon l'une des revendications précédentes, **caractérisé en ce que** le réacteur tubulaire comporte plusieurs segments dont le diamètre augmente de l'entrée vers la sortie du réacteur.

**17.** Procédé selon l'une des revendications précédentes **caractérisé en ce que** la vitesse superficielle de la phase liquide dans le réacteur est supérieure à 0,1 m/s.

**18.** Procédé selon l'une des revendications précédentes **caractérisé en ce que** le réacteur est placé dans une enceinte ou double-enveloppe comprenant un fluide caloporteur.

**19.** Procédé selon l'une des revendications précédentes **caractérisé en ce que** la pression P2 dans l'enceinte où est effectuée l'évacuation est régulée à une valeur de consigne telle que P2 est comprise entre 0,5 et 2,5 MPa.

**20.** Procédé selon l'une des revendications précédentes **caractérisé en ce que** le débit de phase vapeur évacué est asservi à une détection de niveau de la phase liquide dans l'enceinte où est effectuée l'évacuation, plus particulièrement dans la partie de l'enceinte destinée à la récupération de la phase liquide, le débit d'évacuation de la phase vapeur étant diminué lorsqu'un niveau de consigne est dépassé.

**21.** Procédé selon l'une des revendications précédentes, **caractérisé en ce que** l'évacuation est effectuée dans un dispositif de type cyclone, comprenant une partie cylindrique dans laquelle est alimentée du flux de matière, et une partie conique destinée à la récupération de la phase liquide du produit de polycondensation, et un dispositif d'évacuation de la phase vapeur.

**22.** Procédé selon l'une des revendications précédentes **caractérisé en ce que** la détente d'au moins la phase liquide comprenant au moins le flux de produit de polycondensation est réalisée dans un dispositif tubulaire comprenant éventuellement plusieurs segments de sections croissantes.

**23.** Procédé selon la revendication 22, **caractérisé en ce que** le dispositif tubulaire de détente est placé dans une enceinte ou une double-enveloppe comprenant un fluide caloporteur.

**24.** Procédé selon la revendication 23, **caractérisé en ce que** le fluide caloporteur est maintenu sous forme de vapeur à l'aide d'un rebouilleur.

**25.** Procédé selon l'une des revendications précédentes, **caractérisé en ce que** le degré d'avancement de la polycondensation du flux de produit issu de l'étape 3 est de préférence supérieur à 90% pour un polyamide 66.

**26.** Procédé selon l'une des revendications précédentes, **caractérisé en ce que** l'étape 3 est suivie d'une étape de finition de la polycondensation, en phase fondue, ou d'une post-condensation en phase solide.

**27.** Procédé selon la revendication 26 **caractérisé en ce que** l'étape de finition ou de post-condensation en phase solide est précédée d'une étape de séparation de la phase vapeur comprise dans le flux sortant de l'étape de détente.

**28.** Procédé selon l'une des revendications précédentes, **caractérisé en ce qu'**il comprend, entre les étapes 2 et 3, au moins une série d'étapes successives de polycondensation i et d'évacuation j analogues respectivement aux étapes 1 et 2 à partir de la phase liquide issue de l'étape 2, les pressions dans le réacteur tubulaire de polycondensation de l'étape i et dans l'enceinte d'évacuation de l'étape j étant supérieures à la pression atmosphérique, et la pression P'i d'entrée dans le réacteur tubulaire de polycondensation de l'étape i étant supérieure à la pression P"i de sortie de celui-ci.

## Claims

**1.** Process for the continuous manufacture of a polyamide comprising at least the following stages:

- Stage 1: Polycondensation in a reactor of a liquid stream comprising the monomers, at a pressure P1 greater than atmospheric pressure, the stream of material at the outlet of the reactor being composed of a vapour phase comprising at least steam and of a liquid phase comprising at least the polycondensation product

- Stage 2: Feeding the stream of material to a chamber, evacuating at least a portion of the vapour phase from the chamber and recovering at least the liquid phase comprising at least the polycondensation product, the pressure P2 in the chamber being regulated at a set value such that it is greater than atmospheric pressure and that the residence time of the liquid phase in the chamber is less than 5-minutes, preferably less than 1 minute

- Stage 3: Pressure reduction of at least the liquid phase comprising at least the stream of polycondensation product recovered during Stage 2.

2. Process according to Claim 1, **characterized in that**, in Stage 1, the stream of liquid is fed at a pressure P'1 greater than atmospheric pressure, the stream of material at the outlet of the reactor being at a pressure P''1 which is lower than the feed pressure P'1 and greater than atmospheric pressure.

3. Process according to Claim 1 or 2, **characterized in that**, in Stage 2, the pressure P2 in the chamber is regulated at a set value such that there is no retention of the liquid phase in the chamber.

4. Process according to one of the preceding claims, **characterized in that** the reactor is a tubular reactor.

5. Process according to one of the preceding claims, **characterized in that** the monomers are a dicarboxylic acid and a diamine.

6. Process according to Claim 5, **characterized in that** the polyamide is a polyamide 66 or a copolyamide, the majority of the repeat units of which are polyamide 66 units, the dicarboxylic acid being adipic acid and the diamine being hexamethylenediamine.

7. Process according to one of Claims 1 to 4, **characterized in that** the monomers are a lactam and/or an amino acid.

8. Process according to Claim 7, **characterized in that** the polyamide is a polyamide 6 or a copolyamide, the majority of the repeat units of which are polyamide 6 units, the lactam being caprolactam and/or the amino acid being aminohexanoic acid.

9. Process according to'one of the preceding claims, **characterized in that** the liquid stream comprising the monomers is an aqueous solution.

10. Process according to one of the preceding claims, **characterized in that** the liquid stream comprises between 50% and 100% by weight of monomers.

11. Process according to one of the preceding claims, **characterized in that** the stream fed to the tubular reactor is at a pressure P'1 of greater than 1 MPa, preferably of greater than or equal to 1.5 MPa.

12. Process according to one of the preceding claims, **characterized in that** the stream of material at the outlet of the tubular reactor is at a pressure P''1 of greater than 0.5 MPa, preferably of greater than or equal to 1 MPa, and at a temperature of greater than 200°C.

13. Process according to one of the preceding claims, **characterized in that** the degree of progression of a polycondensation at the outlet of the reactor is greater than 90% for a polyamide 66.

14. Process according to one of the preceding claims, **characterized in that** the residence time of the liquid phase in the reactor is greater than 5 minutes.

15. Process according to one of the preceding claims, **characterized in that** the tubular reactor comprises one or more segments of different diameters, the length/diameter ratio of which is greater than 100, preferably greater than 500.

16. Process according to one of the preceding claims, **characterized in that** the tubular reactor comprises several segments, the diameter of which increases from the inlet towards the outlet of the reactor.

17. Process according to one of the preceding claims, **characterized in that** the surface speed of the liquid phase in the reactor is greater than 0.1 m/s.

**18.** Process according to one of the preceding claims, **characterized in that** the reactor is placed in a chamber or jacket comprising a heat-exchange fluid.

**19.** Process according to one of the preceding claims, **characterized in that** the pressure P2 in the chamber where evacuation is carried out is regulated at a set value such that P2 is between 0.5 and 2.5 MPa.

**20.** Process according to one of the preceding claims, **characterized in that** the throughput of evacuated vapour phase is subject to the control of detection of the level of the liquid phase in the chamber where evacuation is carried out, more particularly in the part of the chamber intended for the recovery of the liquid phase, the throughput for evacuation of the vapour phase being reduced when a set level is exceeded.

**21.** Process according to one of the preceding claims, **characterized in that** the evacuation is carried out in a device of cyclone type comprising a cylindrical part into which the stream of material is fed, a conical part intended for the recovery of the liquid phase of the polycondensation product and a device for evacuation of the vapour phase.

**22.** Process according to one of the preceding claims, **characterized in that** the pressure reduction of at least the liquid phase comprising at least the stream of polycondensation product is carried out in a tubular device optionally comprising several segments with increasing cross sections.

**23.** Process according to Claim 22, **characterized in that** the tubular pressure-reducing device is placed in a chamber or a jacket comprising a heat-exchange fluid.

**24.** Process according to Claim 23, **characterized in that** the heat-exchange fluid is maintained in the vapour form using a boiler.

**25.** Process according to one of the preceding claims, **characterized in that** the degree of progression of the polycondensation of the stream of product resulting from Stage 3 is preferably greater than 90% for a polyamide 66.

**26.** Process according to one of the preceding claims, **characterized in that** Stage 3 is followed by a stage of finishing the polycondensation, in the molten phase, or by a postcondensation in the solid phase.

**27.** Process according to Claim 26, **characterized in that** the finishing stage or the stage of postcondensation in the solid phase is preceded by a stage of separation of the vapour phase present in the stream exiting from the pressure-reducing stage.

**28.** Process according to one of the preceding claims, **characterized in that** it comprises, between Stage 2 and Stage 3, at least one series of successive stages of polycondensation i and of evacuation j which are respectively analogous to Stage 1 and Stage 2, starting from the liquid phase resulting from Stage 2, the pressures in the tubular polycondensation reactor of stage i and in the evacuation chamber of stage j being greater than atmospheric pressure and the inlet pressure P'i in the tubular polycondensation reactor of stage i being greater than the outlet pressure P''i of the latter.

**Patentansprüche**

**1.** Verfahren zur kontinuierlichen Herstellung eines Polyamids, das mindestens die folgenden Schritte umfaßt:

- Schritt 1: Polykondensation eines Flüssigkeitsstroms, der die Monomere umfaßt, in einem Reaktor bei einem Druck P1, der über Atmosphärendruck liegt, wobei der Stoffstrom am Ausgang des Reaktors aus einer Dampfphase, die zumindest Wasserdampf umfaßt, und einer Flüssigphase, die zumindest das Polykondensationsprodukt umfaßt, besteht;
- Schritt 2: Eintragen des Stoffstroms in eine Kammer, Abziehen zumindest eines Teils der Dampfphase aus der Kammer und Gewinnung zumindest der Flüssigphase, die zumindest das Polykondensationsprodukt umfaßt, wobei der Druck P2 in der Kammer auf einen solchen Einstellwert reguliert wird, daß er über Atmosphärendruck liegt, und daß die Verweilzeit der Flüssigphase in der Kammer weniger als 5 Minuten, vorzugsweise weniger als 1 Minute, beträgt;
- Schritt 3: Entspannung zumindest der in Schritt 2 gewonnenen Flüssigphase, die zumindest den Polykondensationsproduktstrom umfaßt.

**2.** Verfahren nach Anspruch 1, **dadurch gekennzeichnet, daß** man in Schritt 1 den Flüssigkeitsstrom bei einem Druck P'1, der über Atmosphärendruck liegt, einträgt, wobei der Stoffstrom am Ausgang des Reaktors sich bei einem Druck P''1, der unter dem Eintragungsdruck P'1 und über Atmosphärendruck liegt, befindet.

**3.** Verfahren nach Anspruch 1 oder 2, **dadurch gekennzeichnet, daß** in Schritt 2 der Druck P2 in der Kammer auf einen solchen Einstellwert reguliert wird, daß es keine Retention der Flüssigphase in der Kammer gibt.

**4.** Verfahren nach einem der vorhergehenden Ansprüche, **dadurch gekennzeichnet, daß** es sich bei dem Reaktor um einen Rohrreaktor handelt.

**5.** Verfahren nach einem der vorhergehenden Ansprüche, **dadurch gekennzeichnet, daß** es sich bei den Monomeren um eine Dicarbonsäure und ein Diamin handelt.

**6.** Verfahren nach Anspruch 5, **dadurch gekennzeichnet, daß** es sich bei dem Polyamid um ein Polyamid-66 oder ein Copolyamid, bei dessen Wiederholungseinheiten es sich mehrheitlich um Polyamid-66-Einheiten handelt, handelt, wobei es sich bei der Dicarbonsäure um Adipinsäure handelt und es sich bei dem Diamin um Hexamethylendiamin handelt.

**7.** Verfahren nach einem der Ansprüche 1 bis 4, **dadurch gekennzeichnet, daß** es sich bei den Monomeren um ein Lactam und/oder eine Aminosäure handelt.

**8.** Verfahren nach Anspruch 7, **dadurch gekennzeichnet, daß** es sich bei dem Polyamid um ein Polyamid-6 oder ein Copolyamid, bei dessen Wiederholungseinheiten es sich mehrheitlich um Polyamid-6-Einheiten handelt, handelt, wobei es sich bei dem Lactam um Caprolactam handelt und es sich bei der Aminosäure um Aminohexansäure handelt.

**9.** Verfahren nach einem der vorhergehenden Ansprüche, **dadurch gekennzeichnet, daß** es sich bei dem Flüssigkeitsstrom, der die Monomere umfaßt, um eine wäßrige Lösung handelt.

**10.** Verfahren nach einem der vorhergehenden Ansprüche, **dadurch gekennzeichnet, daß** der Flüssigkeitsstrom zwischen 50 und 100 Gew.-% Monomere umfaßt.

**11.** Verfahren nach einem der vorhergehenden Ansprüche, **dadurch gekennzeichnet, daß** sich der in den Rohrreaktor eingetragene Strom bei einem Durck P'1 von mehr als 1 MPa, vorzugsweise größer gleich 1,5 MPa, befindet.

**12.** Verfahren nach einem der vorhergehenden Ansprüche, **dadurch gekennzeichnet, daß** sich der Stoffstrom am Ausgang des Rohrreaktors bei einem Druck P''1 von mehr als 0,5 MPa, vorzugsweise größer gleich 1 MPa, und bei einer Temperatur von mehr als 200°C befindet.

**13.** Verfahren nach einem der vorhergehenden Ansprüche, **dadurch gekennzeichnet, daß** der Fortschrittsgrad der Polykondensation am Ausgang des Reaktors mehr als 90% für ein Polyamid-66 beträgt.

**14.** Verfahren nach einem der vorhergehenden Ansprüche, **dadurch gekennzeichnet, daß** die Verweilzeit der Flüssigphase in dem Reaktor mehr als 5 Minuten beträgt.

**15.** Verfahren nach einem der vorhergehenden Ansprüche, **dadurch gekennzeichnet, daß** der Rohrreaktor ein oder mehrere Segmente mit verschiedenem Durchmesser umfaßt, deren Länge/Durchmesser-Verhältnis größer als 100, vorzugsweise größer als 500, ist.

**16.** Verfahren nach einem der vorhergehenden Ansprüche, **dadurch gekennzeichnet, daß** der Rohrreaktor mehrere Segmente enthält, deren Durchmesser vom Eingang zum Ausgang des Reaktors zunimmt.

**17.** Verfahren nach einem der vorhergehenden Ansprüche, **dadurch gekennzeichnet, daß** die Leerrohrgeschwindigkeit der Flüssigphase in dem Reaktor mehr als 0,1 m/s beträgt.

**18.** Verfahren nach einem der vorhergehenden Ansprüche, **dadurch gekennzeichnet, daß** der Reaktor in einer Kammer oder einem Doppelmantel mit einem Wärmeträgerfluid angeordnet wird.

19. Verfahren nach einem der vorhergehenden Ansprüche, **dadurch gekennzeichnet, daß** der Druck P2 in der Kammer, in der das Abziehen erfolgt, auf einen solchen Einstellwert reguliert wird, daß P2 zwischen 0,5 und 2,5 MPa liegt.

20. Verfahren nach einem der vorhergehenden Ansprüche, **dadurch gekennzeichnet, daß** der Durchsatz der abgezogenen Dampfphase durch eine Detektion des Niveaus der Flüssigphase in der Kammer, in der das Abziehen erfolgt, insbesondere in dem Teil der Kammer, der zur Gewinnung der Flüssigphase bestimmt ist, geregelt wird, wobei der Abziehungsdurchsatz der Dampfphase verringert wird, wenn ein Einstellniveau überschritten wird.

21. Verfahren nach einem der vorhergehenden Ansprüche, **dadurch gekennzeichnet, daß** das Abziehen in einer Vorrichtung vom Zyklontyp mit einem zylindrischen Teil, in den der Stoffstrom eingetragen wird, und einem konischen Teil, der zur Gewinnung der Flüssigphase des Polykondensationsprodukts bestimmt ist, und einer Vorrichtung zum Abziehen der Dampfphase durchgeführt wird.

22. Verfahren nach einem.der vorhergehenden Ansprüche, **dadurch gekennzeichnet, daß** die Entspannung zumindest der Flüssigphase, die zumindest den Polykondensationsproduktstrom umfaßt, in einer rohrförmigen Vorrichtung, die gegebenenfalls mehrere Segmente mit zunehmendem Querschnitt aufweist, durchgeführt wird.

23. Verfahren nach Anspruch 22, **dadurch gekennzeichnet, daß** die rohrförmige Entspannungsvorrichtung in einer Kammer oder einem Doppelmantel mit einem Wärmeträgerfluid angeordnet wird.

24. Verfahren nach Anspruch 23, **dadurch gekennzeichnet, daß** das Wärmeträgerfluid mit Hilfe eines Verdampfers in Dampfform gehalten wird.

25. Verfahren nach einem der vorhergehenden Ansprüche, **dadurch gekennzeichnet, daß** der Fortschrittsgrad der Polykondensation des Produktstroms aus Schritt 3 vorzugsweise mehr als 90% für ein Polyamid-66 beträgt.

26. Verfahren nach einem der vorhergehenden Ansprüche, **dadurch gekennzeichnet, daß** auf Schritt 3 ein Schritt des Polymerisationsabschlusses in schmelzflüssiger Phase oder einer Nachkondensation in fester Phase folgt.

27. Verfahren nach Anspruch 26, **dadurch gekennzeichnet, daß** dem Abschlußschritt oder Nachkondensationsschritt in fester Phase ein Schritt der Abtrennung der in dem Strom aus dem Entspannungsschritt enthaltenen Dampfphase vorhergeht.

28. Verfahren nach einem der vorhergehenden Ansprüche, **dadurch gekennzeichnet, daß** es zwischen den Schritten 2 und 3 zumindest eine Reihe von aufeinanderfolgenden Polykondensationsschritten i und Abziehschritten j in Analogie zu den Schritten 1 bzw. 2 ausgehend von der Flüssigphase aus Schritt 2 umfaßt, wobei die Drücke in dem Polykondensationsrohrreaktor von Schritt i und in der Abziehkammer von Schritt j über Atmosphärendruck liegen und der Druck P'i am Eingang in den Polykondensationsrohrreaktor des Schritts i über dem Druck P''i an dessen Ausgang liegt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1505307
- FR 1352650
- FR 1520190
- DE 19804023 A1

**Littérature non-brevet citée dans la description**

- Génie de la réaction chimique. Technique et Documentation. 2001, 137-141